(19) Europäisches Patentamt / European Patent Office / Office européen des brevets

(11) **EP 4 369 025 B1**

(12) **EUROPEAN PATENT SPECIFICATION**

(45) Date of publication and mention
of the grant of the patent:
**30.07.2025 Bulletin 2025/31**

(21) Application number: **21954161.2**

(22) Date of filing: **18.08.2021**

(51) International Patent Classification (IPC):
*G01S 7/02* (2006.01)        *G01S 13/58* (2006.01)
*G01S 7/41* (2006.01)        *G01S 7/42* (2006.01)
*G01S 13/42* (2006.01)       *G01S 13/46* (2006.01)
*G01S 13/66* (2006.01)       *G01S 13/93* (2020.01)
*H04B 7/0413* (2017.01)      *H04B 7/08* (2006.01)
*G01S 13/931* (2020.01)

(52) Cooperative Patent Classification (CPC):
**G01S 13/42; G01S 13/426;** G01S 13/931

(86) International application number:
**PCT/JP2021/030093**

(87) International publication number:
**WO 2023/021587 (23.02.2023 Gazette 2023/08)**

(54) **MIMO RADAR-SIGNAL PROCESSING DEVICE, RECEPTION-SIGNAL PROCESSING DEVICE THEREOF, AND METHOD FOR DISCRIMINATING PROPAGATION MODE OF RECEPTION-SIGNAL VECTOR OF INTEREST**

MIMO-RADARSIGNALVERARBEITUNGSVORRICHTUNG, EMPFANGSSIGNALVERARBEITUNGSVORRICHTUNG DAFÜR UND VERFAHREN ZUR UNTERSCHEIDUNG DES AUSBREITUNGSMODUS EINES INTERESSIERENDEN EMPFANGSSIGNALVEKTORS

DISPOSITIF DE TRAITEMENT DE SIGNAL RADAR MIMO, DISPOSITIF DE TRAITEMENT DE SIGNAL DE RÉCEPTION ASSOCIÉ, ET PROCÉDÉ DE DISCRIMINATION DE MODE DE PROPAGATION D'UN VECTEUR DE SIGNAL DE RÉCEPTION D'INTÉRÊT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**15.05.2024 Bulletin 2024/20**

(73) Proprietor: **MITSUBISHI ELECTRIC CORPORATION**
**Chiyoda-ku**
**Tokyo 100-8310 (JP)**

(72) Inventor: **TAKAHASHI, Ryuhei**
**Tokyo 100-8310 (JP)**

(74) Representative: **Pfenning, Meinig & Partner mbB**
**Patent- und Rechtsanwälte**
**An der Frauenkirche 20**
**01067 Dresden (DE)**

(56) References cited:
WO-A1-2018/154748        WO-A1-2019/155625
CN-A- 111 896 929        CN-B- 103 760 547
JP-A- 2017 003 498       JP-A- 2017 116 425
JP-A- 2019 522 220       US-A1- 2020 292 690
US-A1- 2021 028 826

• **CHENG-HAN HSU ET AL: "Joint angles of departure and angles of arrival estimation via a spatial-temporal scheme in overloaded bistatic multiple-input multiple-output radars", IET RADAR SONAR NAVIGATION, THE INSTITUTION OF ENGINEERING AND TECHNOLOGY, UK, vol. 8, no. 7, 1 August 2014 (2014-08-01), pages 837 - 844, XP006109929, ISSN: 1751-8784, DOI: 10.1049/IET-RSN.2013.0307**

EP 4 369 025 B1

- **MARTIN STEINBAUER ET AL: "The Double-Directional Radio Channel", IEEE ANTENNAS AND PROPAGATION MAGAZINE, IEEE SERVICE CENTER, PISCATAWAY, NJ, US, vol. 43, no. 4, 1 August 2001 (2001-08-01), pages 51 - 63, XP011091614, ISSN: 1045-9243**

**Description**

TECHNICAL FIELD

The present disclosure relates to a multiple input multiple output (MIMO) radar signal processing device that outputs different transmission signals to each of a plurality of transmission antennas, receives reception signals from a plurality of reception antennas that capture, as arrival waves, reflected waves obtained by transmission waves transmitted from the transmission antennas, reaching an object and being reflected, and obtain, from the received reception signals, a bidirectional measured angle value constituted by a direction-of-departure and a direction-of-arrival in a reception signal vector of interest.

BACKGROUND ART

As a path of an arrival wave in the MIMO radar device, in addition to a direct propagation mode in which a path (outward path) through which a transmission wave from the MIMO radar device reaches an object and a path (return path) through which a reflected wave from the object reaches the MIMO radar device coincide with each other, there is a multipath propagation mode in which the outward path and the return path do not coincide with each other.

Therefore, in the MIMO radar signal processing device in the MIMO radar device, it is necessary to distinguish whether the reception signal is in the direct propagation mode or the multipath propagation mode.

Patent Literature 1 discloses a signal processing device that determines whether or not an estimation result of an arrival direction is correct on the basis of a residual signal that is a difference between a reception signal of an antenna and an estimated reception signal calculated on the basis of estimation of an arrival direction of a radio wave calculated on the basis of reception signals of a plurality of antennas, and suppresses erroneous detection of an object.

Also, Patent Literature 2 describes a radar device capable of reducing direct propagation clutters and multipath clutters included in a reception signal, wherein the window function calculating unit calculates a window function for obtaining a side lobe characteristic that reduces unnecessary signals on the basis of the unnecessary signal correlation matrix after the diagonal load processing, calculated by the diagonal load processing unit. The window function applying unit multiplies the reception signal vector output from the M matched filter banks by the window function calculated by the window function calculating unit, and outputs a reception signal vector to which the window function is applied. The beam forming unit forms a MIMO beam on the basis of the reception signal vector output from the window function applying unit and a beam directivity angle.

Additionally, Patent Literature 3 discloses a method including repeatedly scanning a transmitter antenna array and a receiver antenna array of an object sensing system through a plurality of designated transmitter and receiver channels over a period of time to generate a time series of measured channel responses corresponding to each one of the designated channels, determining a time series of directional vectors to or from an object scanned by at least one of the designated channels, and/or a corresponding time series of average phase differences, based, at least in part, on the time series of measured channel responses, and determining an angular velocity of the object from the time series of directional vectors and/or the corresponding time series of average phase differences.

Furthermore, Patent Literature 4 describes a double-base MIMO radar angle estimating method based on cross-correlation matrixes, wherein the DOD and DOA data from the received data construct a new cross-correlation covariance matrix, and to solve the projection vector zero-space projection operator according to the linear independence of the cross-correlation matrix row vector, using the root MUSIC. The algorithm solves the target angle, and constructs the cost function by constructing the cost function of the projection operator zero-space projection operator to realize the pairing of DOD and DOA.

Non-Patent Literature 1 describes a signal subspace-based technique that was used to estimate joint angles of departure (AODs) and angles of arrival (AOAs) in an overloaded bistatic multiple-input multiple-output (MIMO) radar system. First, a spatial-temporal scheme is used to expand the degrees of freedom in the array. Thus, the number of target AODs and AOAs that can be estimated is higher than the number of the product of the transmit and receive elements. The steering vectors of AODs and AOAs are then obtained from spatial-temporal eigenvectors, which contain the spatial and temporal information of received signals. This enables highly accurate AOD and AOA estimates even in an overloaded system. The results of several simulations are given to illustrate the effectiveness of the proposed approach.

Lastly, Non-Patent Literature 2 discloses the concept of the double-directional mobile radio channel. Hereby the angular information at both link ends are included, e.g., at the base station and at the mobile station, wherein this angular information can be obtained with synchronized antenna arrays at both link ends. In wideband high-resolution measurements, a switched linear array at the receiver and a virtual-cross array at the transmitter have been used. The evaluation of the raw measurement data is conducted with a technique that alternately used estimation and beamforming, and that relied on ESPRIT (estimation of signal parameters via rotational invariance techniques) to obtain superresolution in both angular domains and in the delay domain. The major multipath components are matched to the physical environment by geometrical considerations. Up to three reflection/scattering points per propagation path are identified and localized, lending insight into the multipath spreading properties in a microcell. The extracted multipath parameters allow unambiguous scatterer identification and channel characterization, independently of a specific antenna, its configuration (single/array), and its pattern.

CITATION LIST

PATENT LITERATURE

Patent Literature 1: JP 2020-186973 A
Patent Literature 2 : US 2021/028826 A1
Patent Literature 3 : US 2020/292690 A1
Patent Literature 4 : CN 103 760 547 B

NON-PATENT LITERATURE

Non-Patent Literature 1 : Hsu, Cheng-Han & Liu, Hsin-Chin & Hua, Meng-Chang. (2014). Joint angles of departure and angles of arrival estimation via a spatial-temporal scheme in overloaded bistatic multiple-input multiple-output radars. Radar, Sonar & Navigation, IET. 8. 837-844. 10.1049/iet-rsn.2013.0307.
Non-Patent Literature 2 : Steinbauer, Martin & Molisch, A.F. & Bonek, Ernst. (2001). The double-directional radio channel. Antennas and Propagation Magazine, IEEE. 43. 51 - 63. 10.1109/74.951559.

SUMMARY OF INVENTION

TECHNICAL PROBLEM

However, in the signal processing device disclosed in Patent Literature 1, although the estimated reception signal is calculated using the arrival angle of the arrival wave, it is not possible to accurately grasp the propagation environment sensed by the MIMO radar device, that is, the propagation environment in the radio wave irradiation range, and thus, it is desired to be able to distinguish the direct propagation mode with higher accuracy.

The present disclosure has been made in view of the above points, and it is an object of the present disclosure to provide a MIMO radar signal processing device that can distinguish, for example, which of a direct propagation mode and a multipath propagation mode is the propagation mode with higher accuracy and obtain a bidirectional measured angle value that can be used to distinguish the propagation mode.

SOLUTION TO PROBLEM

The invention is set out in the appended set of claims.

ADVANTAGEOUS EFFECTS OF INVENTION

According to the present disclosure, since the bidirectional measured angle value constituted by the direction-of-departure and the direction-of-arrival in the reception signal vector of interest is obtained, for example, when the bidirectional measured angle value is used for distinguishing which one of the direct propagation mode and the multipath propagation mode is used, it is possible to distinguish the propagation mode with higher accuracy, and grasp the propagation environment sensed by the MIMO radar device in more detail.

BRIEF DESCRIPTION OF DRAWINGS

FIG. 1 is an overall configuration diagram illustrating a MIMO radar device according to a first embodiment.
FIG. 2 is a diagram illustrating multipath propagation waves reflected twice in total once by different objects A and B within a radio wave irradiation range of the MIMO radar device.

FIG. 3 is a flowchart illustrating a method for distinguishing a propagation mode of a reception signal vector of interest which is an operation of the reception signal processing device.

DESCRIPTION OF EMBODIMENTS

First Embodiment.

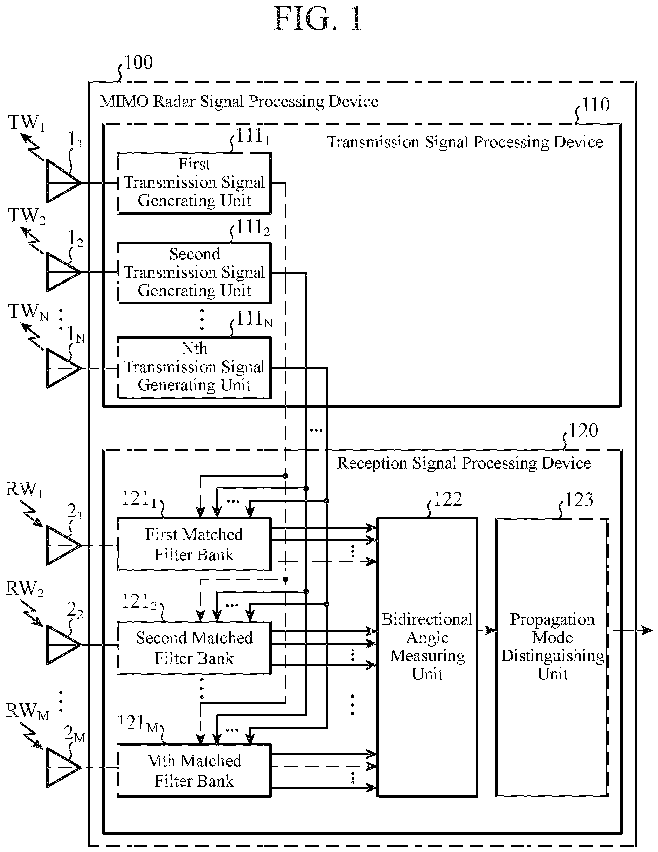

A MIMO radar device according to a first embodiment will be described with reference to FIG. 1.

The MIMO radar device includes a plurality of transmission antennas 1, that is, first transmission antenna $1_1$ to Nth transmission antenna $1_N$, a plurality of reception antennas 2, that is, first reception antenna $2_1$ to Mth reception antenna $2_M$, and a MIMO radar signal processing device 100.

Each of N and M is a natural number equal to or more than two.

The MIMO radar signal processing device 100 includes a transmission signal processing device 110 and a reception signal processing device 120.

The transmission signal processing device 110 includes a plurality of transmission signal generating units 111, that is, a first transmission signal generating unit $111_1$ to an Nth transmission signal generating unit $111_N$.

The reception signal processing device 120 includes a plurality of matched filter banks 121, that is, a first matched filter bank $121_1$ to an Mth matched filter bank $121_M$, a bidirectional angle measuring unit 122, and a propagation mode distinguishing unit 123.

Each of the first transmission antenna $1_1$ to the Nth transmission antenna $1_N$ receives a transmission signal from the corresponding first transmission signal generating unit $111_1$ to the Nth transmission signal generating unit $111_N$, converts the transmission signal into a transmission wave, and transmits, that is, radiates different transmission waves $TW_1$ to $TW_N$.

The first transmission antenna $1_1$ to the Nth transmission antenna $1_N$ are arranged at regular intervals on a straight line.

The first transmission wave $TW_1$ to Nth transmission wave $TW_N$ transmitted from the first transmission antenna $1_1$ to Nth transmission antenna $1_N$ are transmission waves of signals (orthogonal signals) orthogonal to each other. Being orthogonal to each other means, for example, not to interfere with each other due to differences in time, phase, frequency, sign, and the like.

Note that, in order to avoid complexity in the following description, when it is not necessary to distinguish the first transmission antenna $1_1$ to the Nth transmission antenna $1_N$ and the first transmission wave $TW_1$ to the Nth transmission wave $TW_N$, they will be described as the transmission antenna 1 and the transmission wave TW.

The first transmission signal generating unit $111_1$ to the Nth transmission signal generating unit $111_N$ are provided corresponding to the first transmission antenna $1_1$ to the Nth transmission antenna $1_N$, respectively, generate transmission signals different from each other, and output the generated transmission signals to the corresponding transmission antenna 1.

That is, the first transmission signal generating unit $111_1$ generates a first transmission signal and outputs the first transmission signal to the corresponding first transmission antenna $1_1$, the second transmission signal generating unit $111_2$ generates a second transmission signal and outputs the second transmission signal to the corresponding second transmission antenna $1_2$, and the Nth transmission signal generating unit $111_N$ generates an Nth transmission signal and outputs the Nth transmission signal to the corresponding Nth transmission antenna $1_N$. The first transmission signal to the Nth transmission signal are signals orthogonal to each other.

In addition, the first transmission signal generating unit $111_1$ to the Nth transmission signal generating unit $111_N$ output transmission signals to the first matched filter bank $121_1$ to the Mth matched filter bank $121_M$, respectively.

The first transmission signal generating unit $111_1$ to the Nth transmission signal generating unit $111_N$ are known transmission signal generating units, and a specific description thereof will be omitted.

In the following description, in order to avoid complexity, the first transmission signal generating unit $111_1$ to the Nth transmission signal generating unit $111_N$ will be described as the transmission signal generating unit 111 in a case where it is not necessary to distinguish and describe them.

The first reception antenna $2_1$ to the Mth reception antenna $2_M$ are arranged at regular intervals on a straight line.

The first reception antenna $2_1$ to the Mth reception antenna $2_M$ capture, as different arrival waves $RW_1$ to $RW_M$, respective reflected waves obtained by the transmission waves TW transmitted from the plurality of transmission antennas 1, reaching an object and being reflected, convert the arrival waves $RW_1$ to $RW_M$ into reception signals, and output the reception signals to the corresponding first matched filter bank $121_1$ to the Mth matched filter bank $121_M$.

Note that, in order to avoid complexity in the following description, the first reception antenna $2_1$ to the Mth reception antenna $2_M$ will be described as the reception antenna 2 in a case where it is not necessary to distinguish and describe them.

The first matched filter bank $121_1$ to the Mth matched filter bank $121_M$ are provided corresponding to the first

reception antenna $2_1$ to the Mth reception antenna $2_M$, respectively.

Each of the first matched filter bank $121_1$ to the Mth matched filter bank $121_M$ receives the reception signal from the corresponding reception antenna 2 and the transmission signals from the plurality of transmission signal generating units 111.

Each of the first matched filter bank $121_1$ to the Mth matched filter bank $121_M$ includes matched filters, and obtains N matched filter outputs by using transmission signals from the plurality of transmission signal generating units 111 as a replica of the matched filter.

That is, from the first matched filter bank $121_1$ to the Mth matched filter bank $121_M$, $M \times N$ matched filter outputs, that is, $M \times N$ virtual reception signals are obtained by the M reception signals and the N transmission signals.

In other words, the first matched filter bank $121_1$ to the Mth matched filter bank $121_M$ are equivalent to those that convert arrival waves obtained by the $M \times N$ virtual reception antennas arranged at the same interval as the interval at which the plurality of transmission antennas 1 are arranged into reception signals and output the reception signals.

The matched filter outputs from the first matched filter bank $121_1$ to the Mth matched filter bank $121_M$ are vector elements of reception signal vectors in the virtual reception signals by the arrival waves obtained by the $M \times N$ virtual reception antennas.

Among these reception signal vectors, a reception signal vector corresponding to a predetermined range Doppler cell, that is, a range Doppler cell given in the target detection processing is a reception signal vector of interest x(i).

That is, the reception signal vector at the i-th snapshot in which the target detection processing is performed among the snapshots 1 to Ns is the reception signal vector of interest x(i) for each virtual reception antenna. An i is a snapshot number from 1 to $N_S$. $N_S$ is a natural number equal to or more than two.

The first matched filter bank $121_1$ to the Mth matched filter bank $121_M$ each operate by any one of a time division multiple access (TDMA) system, a code division multiple access (CDMA) system, a Doppler division multiple access (DDMA) system, and a frequency division multiple access (FDMA) system.

Provided that, the system is not limited to the specific system described above, and other systems may be used.

The first matched filter bank $121_1$ to the Mth matched filter bank $121_M$ are known matched filter banks, and a specific description thereof is omitted.

Note that, in order to avoid complexity in the following description, the first matched filter bank $121_1$ to the Mth matched filter bank $121_M$ will be described as the matched filter bank 121 in a case where it is not necessary to distinguish and describe them.

In addition, although the reception signal vector of interest x(i) is also present in all the $M \times N$ virtual reception antennas, in order to avoid complexity in the following description, description will be given focusing on one reception signal vector of interest x(i), but the same idea holds for the remaining reception signal vectors of interest x(i).

Before describing the bidirectional angle measuring unit 122 and the propagation mode distinguishing unit 123 which are the feature points in the first embodiment in the reception signal processing device 120, the reception signal vector of interest x(i) will be described.

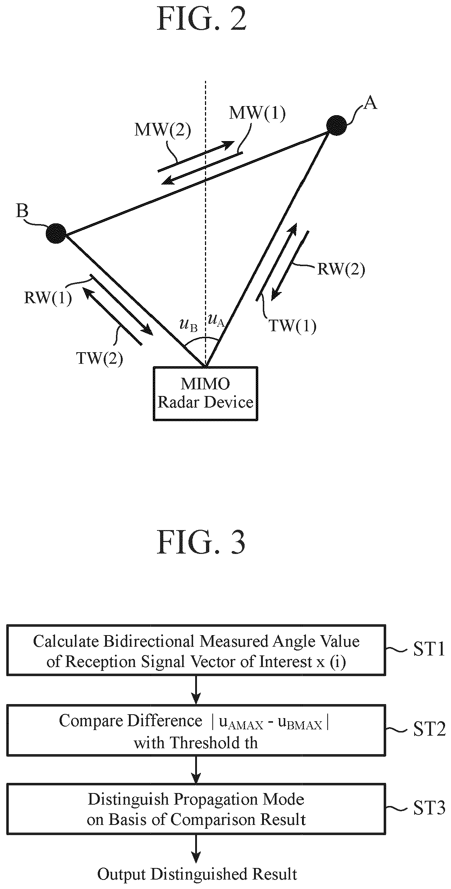

First, as illustrated in FIG. 2, a reception signal vector of interest x(i) in the multipath propagation mode when there are different objects A and B within the radio wave irradiation range of the MIMO radar device and the reception antenna 2 captures the multipath propagation wave as an arrival wave will be described.

Note that the radio wave irradiation range of the MIMO radar device is a propagation environment sensed by the MIMO radar device.

Assuming that the propagation angle from the object A to the object B is $(u_A, u_B)$ (with the proviso that $u_A \neq u_B$) and the propagation angle from the object B to the object A is $(u_B, u_A)$ (with the proviso that $u_A \neq u_B$), propagation reflected once by each of the object A and the object B has two multipath propagation paths bidirectionally as indicated by arrows in FIG. 2 due to propagation reversibility, that is, a first multipath propagation path in a counterclockwise turn by $TW(1) \rightarrow MW(1) \rightarrow RW(1)$ and a second multipath propagation path in a clockwise turn by $TW(2) \rightarrow MW(2) \rightarrow RW(2)$.

Here, the propagation angle is an azimuth angle or an elevation angle and corresponds to an angle in a plane.

Needless to say, the propagation angle may be an angle in a space determined by the azimuth angle and the elevation angle.

In the following description, a case where the propagation angle corresponds to an angle in a plane by an azimuth angle or an elevation angle will be described, but the same applies to a case where the propagation angle is an angle in a space determined by the azimuth angle and the elevation angle.

The first multipath propagation path $TW(1) \rightarrow MW(1) \rightarrow RW(1)$ is a counterclockwise multipath propagation path in which the transmission wave TW from the MIMO radar device is reflected by the object A, and the reflected wave is reflected by the object B to reach the MIMO radar device as the arrival wave RW.

The second multipath propagation path $TW(2) \rightarrow MW(2) \rightarrow RW(2)$ is a clockwise multipath propagation path in which the transmission wave TW from the MIMO radar device is reflected by the object B, and the reflected wave is reflected by the object A to reach the MIMO radar device as the arrival wave RW.

Note that a multipath propagation path reflected by an object twice will be described, but the following description holds even if the multipath propagation path is reflected by the object three times or more.

In the first multipath propagation path, the propagation angle $u_A$ is the direction-of-departure (DOD), and the propagation angle $u_B$ is the direction-of-arrival (DOA). In the second multipath propagation path, the propagation angle $u_B$ is the direction-of-departure, and the propagation angle $u_A$ is the direction-of-arrival.

The reception signal vector of interest x(i) at this time is expressed by the following Equation (1).

$$\begin{aligned} x(i) &= a_{\mathrm{MIMO}}(u_A, u_B)s(i) + a_{\mathrm{MIMO}}(u_B, u_A)s(i) + n(i) \\ &= \left(a_{\mathrm{MIMO}}(u_A, u_B) + a_{\mathrm{MIMO}}(u_B, u_A)\right)s(i) + n(i) \qquad \cdots (1) \\ &= b(u_A, u_B)s(i) + n(i) \end{aligned}$$

In Equation (1), i is a snapshot number from one to Ns, s(i) is a complex amplitude of the reflected signal, n(i) is a receiver noise vector, $a_{\mathrm{MIMO}}(u_A, u_B)$ is a virtual array steering vector corresponding to the direction-of-departure $u_A$ and the direction-of-arrival $u_B$ in the first multipath propagation path, $a_{\mathrm{MIMO}}(u_B, u_A)$ is a virtual array steering vector corresponding to the direction-of-departure $u_B$ and the direction-of-arrival $u_A$ in the second multipath propagation path, and b $(u_A, u_B)$ is a multipath steering vector corresponding to the propagation angle $(u_A, u_B)$.

The virtual array steering vector $a_{\mathrm{MIMO}}(u_A, u_B)$ is given by a Kronecker product of the transmission array steering vector $a_T(u_A)$ and the reception array steering vector $a_R(u_B)$, and the virtual array steering vector $a_{\mathrm{MIMO}}(u_B, u_A)$ is given by a Kronecker product of the transmission array steering vector $a_T(u_B)$ and the reception array steering vector $a_R(u_A)$, and is expressed by the following Equation (2).

$$\begin{aligned} a_{\mathrm{MIMO}}(u_A, u_B) &= a_T(u_A) \otimes a_R(u_B) \\ a_{\mathrm{MIMO}}(u_B, u_A) &= a_T(u_B) \otimes a_R(u_A) \qquad \cdots (2) \end{aligned}$$

The multipath steering vector b $(u_A, u_B)$ in the above Equation (1) is expressed by the following Equation (3) in consideration of the above Equation (2).

$$\begin{aligned} b(u_A, u_B) &= a_{\mathrm{MIMO}}(u_A, u_B) + a_{\mathrm{MIMO}}(u_B, u_A) \qquad \cdots (3) \\ &= a_T(u_A) \otimes a_R(u_B) + a_T(u_B) \otimes a_R(u_A) \end{aligned}$$

In addition, as is clear from the above Equation (3), the multipath steering vector b $(u_B, u_A)$ corresponding to the propagation angle $(u_B, u_A)$ is equal to the multipath steering vector b $(u_A, u_B)$ corresponding to the propagation angle $(u_A, u_B)$, and the following Equation (4) holds.

$$b(u_B, u_A) = b(u_A, u_B) \qquad \cdots (4)$$

On the other hand, a correlation matrix $R_{XX}$ in the reception signal vector of interest x(i) is expressed by the following Equation (5).

$$\begin{aligned} R_{\mathrm{XX}} &= \frac{1}{N_s}\sum_{i=1}^{N_s} x(i)x^H(i) \\ &= p_s b(u_A, u_B)b^H(u_A, u_B) + \sigma^2 I (N_s \to \infty) \\ &= p_s\left(a_{\mathrm{MIMO}}(u_A, u_B) + a_{\mathrm{MIMO}}(u_B, u_A)\right) \cdot \left(a_{\mathrm{MIMO}}^H(u_A, u_B) + a_{\mathrm{MIMO}}^H(u_B, u_A)\right) + \sigma^2 I \\ &= p_s\begin{pmatrix} a_{\mathrm{MIMO}}(u_A, u_B)a_{\mathrm{MIMO}}^H(u_A, u_B) \\ + a_{\mathrm{MIMO}}(u_A, u_B)a_{\mathrm{MIMO}}^H(u_B, u_A) \\ + a_{\mathrm{MIMO}}(u_B, u_A)a_{\mathrm{MIMO}}^H(u_A, u_B) \\ + a_{\mathrm{MIMO}}(u_B, u_A)a_{\mathrm{MIMO}}^H(u_B, u_A) \end{pmatrix} + \sigma^2 I \qquad \cdots (5) \\ &= R_{\mathrm{AB}} + R_{\mathrm{AB}}^{(\mathrm{cross})} + R_{\mathrm{BA}} + \sigma^2 I \end{aligned}$$

In Equation (5), $P_S$ is a reflected signal power, $\sigma^2$ is a receiver noise power, $R_{AB}$ is an autocorrelation matrix of the multipath propagation wave in the first multipath propagation path, and $R_{BA}$ is an autocorrelation matrix of the multipath propagation wave in the second multipath propagation path.

The autocorrelation matrix $R_{AB}$ and the autocorrelation matrix $R_{BA}$ are expressed by the following Equation (6).

$$\boldsymbol{R}_{\mathrm{AB}} = p_s \boldsymbol{a}_{\mathrm{MIMO}}(u_A, u_B)\boldsymbol{a}_{\mathrm{MIMO}}{}^{H}(u_A, u_B)$$

$$\boldsymbol{R}_{\mathrm{BA}} = p_s \boldsymbol{a}_{\mathrm{MIMO}}(u_B, u_A)\boldsymbol{a}_{\mathrm{MIMO}}{}^{H}(u_B, u_A) \qquad \cdots (6)$$

A term on the right side in the above Equation (5) indicated in the following (7) is a cross-correlation matrix generated because multipath propagation waves in the first multipath propagation path and the second multipath propagation path are coherent.

$$\boldsymbol{R}_{\mathrm{AB}}^{(cross)} \qquad \cdots (7)$$

The cross-correlation matrix expressed by the above (7) is expressed by the following Equation (8).

$$\boldsymbol{R}_{\mathrm{AB}}^{(cross)} = p_s\big(\boldsymbol{a}_{\mathrm{MIMO}}(u_A, u_B)\boldsymbol{a}_{\mathrm{MIMO}}{}^{H}(u_B, u_A) + \boldsymbol{a}_{\mathrm{MIMO}}(u_B, u_A)\boldsymbol{a}_{\mathrm{MIMO}}{}^{H}(u_A, u_B)\big) \qquad \cdots (8)$$

That is, the cross-correlation matrix expressed by the above (7) is the sum of the correlation matrix affected from the second multipath propagation path in the first multipath propagation path and the correlation matrix affected from the first multipath propagation path in the second multipath propagation path, as shown in the above Equation (8).

Next, the reception signal vector of interest x(i) in the direct propagation mode in which the path (outward path) through which the transmission wave TW from the MIMO radar device reaches the object A and the path (return path) through which the arrival wave RW as a reflected wave from the object A reaches the MIMO radar device match will be described.

Since the direction-of-departure $u_A$ in the transmission wave and the direction-of-arrival $u_A$ in the arrival wave are the same, the reception signal vector of interest x(i) in the direct propagation mode is expressed by the following Equation (9).

$$\boldsymbol{x}(i) = \boldsymbol{a}_{\mathrm{MIMO}}(u_A, u_A)s(i) + \boldsymbol{n}(i) \qquad \cdots (9)$$

Therefore, the correlation matrix $R_{XX}$ of the reception signal vector of interest x(i) by the direct propagation wave is expressed by the following Equation (10).

$$\begin{aligned}
\boldsymbol{R}_{\mathrm{xx}} &= \frac{1}{N}\sum_{i=1}^{N} \boldsymbol{x}(i)\boldsymbol{x}^{H}(i) \\
&= p_s \boldsymbol{a}_{\mathrm{MIMO}}(u_A, u_A)\boldsymbol{a}_{\mathrm{MIMO}}{}^{H}(u_A, u_A) + \sigma^2 \boldsymbol{I}(N \to \infty) \qquad \cdots (10) \\
&= \boldsymbol{R}_{\mathrm{AA}} + \sigma^2 \boldsymbol{I}
\end{aligned}$$

In Equation (10), $R_{AA}$ is an autocorrelation matrix of a direct propagation wave in a direct propagation path for the object A, and is expressed by the following Equation (11).

$$\boldsymbol{R}_{\mathrm{AA}} = p_s \boldsymbol{a}_{\mathrm{MIMO}}(u_A, u_A)\boldsymbol{a}_{\mathrm{MIMO}}{}^{H}(u_A, u_A) \qquad \cdots (11)$$

The autocorrelation matrix $R_{BB}$ of the direct propagation wave in the direct propagation mode in which the path (outward path) through which the transmission wave TW from the MIMO radar device reaches the object B coincides with the path (return path) through which the arrival wave RW that is the reflected wave from the object B reaches the MIMO radar device can also be expressed in the same manner as in the above Equation (11).

Next, the bidirectional angle measuring unit 122 and the propagation mode distinguishing unit 123 in the reception signal processing device 120 will be described.

The bidirectional angle measuring unit 122 calculates a bidirectional measured angle value ($u_A$, $u_B$) constituted by the direction-of-departure and the direction-of-arrival in the reception signal vector of interest x(i) corresponding to the range Doppler cell given in the target detection processing by the matched filter outputs from the plurality of matched filter banks 121.

Assuming that the matched filter outputs for the M × N virtual reception antennas input from the plurality of matched filter banks 121 are reception signals in the first direct propagation mode in the direct propagation path for the object A, the second direct propagation mode in the direct propagation path for the object B, the first multipath propagation mode in the first multipath propagation path, or the second multipath propagation mode in the second multipath propagation path, the bidirectional angle measuring unit 122 calculates bidirectional measured angle values ($u_A$, $u_B$)

in the reception signal vector of interest x(i) for each of the matched filter outputs for the M × N virtual reception antennas as follows.

That is, the bidirectional measured angle values ($u_A$, $u_B$) in each of the reception signal vectors of interest x(i) by the bidirectional angle measuring unit 122 are calculated by obtaining the directional spectrum $P_C(u_1, u_2)$ of the beamformer method shown in the following Equation (12), and obtaining the propagation angle $u_1$ and the propagation angle $u_2$ at which the directional spectrum $P_C(u_1, u_2)$ has the maximum values as the direction-of-departure $u_{AMAX}$ and the direction-of-arrival $u_{BMAX}$ constituting the bidirectional measured angle value in the reception signal vector of interest x(i).

In short, in the following Equation (12), the virtual array steering vector $a_{MIMO}$ ($u_A$, $u_B$) is set as a variable, that is, the transmission array steering vector $a_T(u_A)$ and the reception array steering vector $a_R(u_B)$ constituting the virtual array steering vector $a_{MIMO}$ ($u_A$, $u_B$) are set as variables, and the propagation angle $u_1$ and the propagation angle $u_2$ at which the directional spectrum $P_C(u_1, u_2)$ has the maximum value are obtained as the direction-of-departure $u_{AMAX}$ and the direction-of-arrival $u_{BMAX}$ constituting the bidirectional measured angle value in the reception signal vector of interest x(i).

Provided that, the virtual array steering vector $a_{MIMO}$ ($u_A$, $u_B$) of the following Equation (12) includes not only the case of $u_A \neq u_B$ but also $u_A = u_B$.

$$(u_A, u_B) = argmax\, P_c(u_1, u_2)$$

$$P_c(u_1, u_2) = \left| \frac{a_{MIMO}{}^H(u_1,u_2) R_{xx} a_{MIMO}(u_1,u_2)}{a_{MIMO}{}^H(u_1,u_2) a_{MIMO}(u_1,u_2)} \right| \qquad \cdots (1\,2)$$

As is clear from Equation (12), the directional spectrum $P_C(u_1, u_2)$ depends on the virtual array steering vector $a_{MIMO}$ ($u_A$, $u_B$), that is, the transmission array steering vector $a_T(u_A)$ and the reception array steering vector $a_R(u_B)$, and depends on the propagation angle ($u_1$, $u_2$).

In Equation (12), $u_1$ is a scan angle indicating a direction-of-departure, and $u_2$ is a scan angle indicating a direction-of-arrival.

The directional spectrum $P_C(u_1, u_2)$ has a maximum value with respect to the reception signal vector of interest x(i) when the propagation angle ($u_1$, $u_2$) indicates the propagation angle of the direct propagation mode in the direct propagation path or the propagation angle of the multipath propagation mode in the multipath propagation path.

That is, the bidirectional measured angle value ($u_{AMAX}$, $u_{BMAX}$) in which the direction-of-departure is $u_{AMAX}$ and the direction-of-arrival is $u_{BMAX}$ indicates whether the propagation mode of the reception signal vector of interest x(i) is the direct propagation mode or the multipath propagation mode.

In the above description, it has been described that the direction-of-departure is $u_A$ and the direction-of-arrival is $u_B$, but even if the direction-of-departure is $u_B$ and the direction-of-arrival is $u_A$, the bidirectional measured angle value can be obtained exactly the same.

In short, the bidirectional angle measuring unit 122 can obtain a bidirectional measured angle value in which the direction-of-departure is $u_{AMAX}$ and the direction-of-arrival is $u_{BMAX}$ for the reception signal vector of interest x(i) in each virtual reception antenna regardless of the direction-of-departure and the direction-of-arrival in the arrival wave to the virtual reception antenna.

Further, when there is a directional spectrum $P_C(u_1, u_2)$ indicating a plurality of local maximum points in the directional spectrum $P_C(u_1, u_2)$ obtained by using the direction-of-departure $u_1$ and the direction-of-arrival $u_2$ constituting the bidirectional measured angle value in each reception signal vector of interest x(i) as variables, the bidirectional angle measuring unit 122 obtains a difference $|u_1 - u_2|$ between the direction-of-departure $u_1$ and the direction-of-arrival $u_2$ corresponding to each of the directional spectra $P_C(u_1, u_2)$ indicating a plurality of local maximum points, and obtains the direction-of-departure $u_1$ and the direction-of-arrival $u_2$ corresponding to the directional spectrum $P_C(u_1, u_2)$ in which the difference $|u_1 - u_2|$ between the direction-of-departure $u_1$ and the direction-of-arrival $u_2$ indicates a minimum as the direction-of-departure $u_{AMAX}$ and the direction-of-arrival $u_{BMAX}$ constituting the bidirectional measured angle value in the reception signal vector of interest x(i).

Note that the bidirectional angle measuring unit 122 obtains the bidirectional measured angle value ($u_{AMAX}$, $u_{BMAX}$) by the beamformer method in the above example, but may obtain the bidirectional measured angle value ($u_{AMAX}$, $u_{BMAX}$) by the MUSIC method or the ESPRIT method.

The propagation mode distinguishing unit 123 distinguishes whether the propagation mode in the reception signal vector of interest x(i) for the bidirectional measured angle value obtained by the bidirectional angle measuring unit 122 is the direct propagation mode or the multipath propagation mode, and outputs the distinguished result.

The propagation mode distinguishing unit 123 obtains a difference $|u_{AMAX}-u_{BMAX}|$ between the direction-of-departure $u_{AMAX}$ and the direction-of-arrival $u_{BMAX}$ constituting the bidirectional measured angle value obtained by the bidirectional angle measuring unit 122, and compares the obtained difference $|u_{AMAX}-u_{BMAX}|$ with the threshold th.

Note that, in a case where there is a directional spectrum indicating a plurality of local maximum points in a directional spectrum obtained using the direction-of-departure $u_1$ and the direction-of-arrival $u_2$ as variables, a difference |

$u_1 - u_2|$ between the direction-of-departure $u_1$ and the direction-of-arrival $u_2$ is obtained by the bidirectional angle measuring unit 122 for the directional spectrum indicating the plurality of local maximum points, and the difference $|u_{AMAX}-u_{BMAX}|$ between the direction-of-departure $u_{AMAX}$ and the direction-of-arrival $u_{BMAX}$ constituting the bidirectional measured angle value in the reception signal vector of interest $x(i)$ is obtained by the bidirectional angle measuring unit 122, the propagation mode distinguishing unit 123 compares the difference $|u_{AMAX}-u_{BMAX}|$ between the direction-of-departure $u_{AMAX}$ and the direction-of-arrival $u_{BMAX}$ obtained by the bidirectional angle measuring unit 122 with the threshold th.

When the difference $|u_{AMAX}-u_{BMAX}|$ is equal to or less than the threshold th, the propagation mode distinguishing unit 123 distinguishes that the propagation mode of the reception signal vector of interest $x(i)$ is the direct propagation mode, and outputs a distinguished result indicating that the propagation mode is the direct propagation mode.

The difference $|u_{AMAX}-u_{BMAX}|$ being equal to or less than the threshold th means that the direction-of-departure $u_{AMAX}$ and the direction-of-arrival $u_{BMAX}$ are approximate or the same, and the propagation mode of the reception signal vector of interest $x(i)$ is a direct propagation mode in which a path (outward path) through which the transmission wave TW from the MIMO radar device reaches the object and a path (return path) through which the arrival wave RW as a reflected wave from the object reaches the MIMO radar device coincide with each other.

On the other hand, when the difference $|u_{AMAX}-u_{BMAX}|$ exceeds the threshold th, the propagation mode distinguishing unit 123 distinguishes that the propagation mode of the reception signal vector of interest $x(i)$ is the multipath propagation mode, and outputs a distinguished result indicating that the propagation mode is the multipath propagation mode.

The fact that the difference $|u_{AMAX}-u_{BMAX}|$ exceeds the threshold th means that there is a difference between the direction-of-departure $u_{AMAX}$ and the direction-of-arrival $u_{BMAX}$, and means that the propagation mode of the reception signal vector $x(i)$ is a multipath propagation path in which the outward path and the return path of the propagation wave do not coincide with each other.

The bidirectional angle measuring unit 122 and the propagation mode distinguishing unit 123 are constituted by a microcomputer including a central processing unit (CPU) and memories such as a read only memory (ROM) and a random access memory (RAM).

Next, a method for distinguishing a propagation mode of the reception signal vector of interest $x(i)$, which is the operation of the MIMO radar signal processing device, particularly the reception signal processing device, will be described with reference to FIG. 3.

The arrival waves RW captured by the plurality of reception antennas 2 are converted into reception signals by the plurality of reception antennas 2, and the converted reception signals are input to the plurality of matched filter banks 121 corresponding to the plurality of reception antennas 2.

Each matched filter bank 121 outputs matched filter outputs as many as the number of input transmission signals by the reception signal from the corresponding reception antenna 2 and the transmission signals from the plurality of transmission signal generating units 111.

As illustrated in step ST1, the bidirectional angle measuring unit 122 to which the matched filter outputs output from the plurality of matched filter banks 121 are input calculates a bidirectional measured angle value ($u_{AMAX}$, $u_{BMAX}$) in the reception signal vector of interest $x(i)$ for each matched filter output.

The bidirectional measured angle value ($u_{AMAX}$, $u_{BMAX}$) is obtained as a propagation angle ($u_{AMAX}$, $u_{BMAX}$) at which the directional spectrum $P_C(u_1, u_2)$ shown in the above Equation (12) has the maximum value.

Next, as described in step ST2, for each matched filter output, the propagation mode distinguishing unit 123 obtains a difference $|u_{AMAX}-u_{BMAX}|$ between direction-of-departure $u_{AMAX}$ and the direction-of-arrival $u_{BMAX}$ constituting the bidirectional measured angle value in the reception signal vector of interest $x(i)$ calculated by the bidirectional angle measuring unit 122, and compares the obtained difference $|u_{AMAX}-u_{BMAX}|$ with the threshold th.

As illustrated in step ST3, the propagation mode distinguishing unit 123 distinguishes the propagation mode of the reception signal vector of interest $x(i)$ on the basis of the comparison result.

The propagation mode distinguishing unit 123 outputs a distinguished result indicating that the propagation mode is a direct propagation mode when the difference $|u_{AMAX}-u_{BMAX}|$ is equal to or less than the threshold th, and outputs a distinguished result indicating that the propagation mode is a multipath propagation mode when the difference $|u_{AMAX}-u_{BMAX}|$ exceeds the threshold th.

On the other hand, when there is a directional spectrum $|P_C(u_1, u_2)$ indicating a plurality of local maximum points in the directional spectrum $P_C(u_1, u_2)$ obtained by the bidirectional angle measuring unit 122 in step ST1, steps ST1 and ST2 are as follows.

In step ST1, the bidirectional angle measuring unit 122 obtains a difference $|u_1 - u_2|$ between the direction-of-departure $u_1$ and the direction-of-arrival $u_2$ corresponding to each of the directional spectra indicating the plurality of local maximum points.

The bidirectional angle measuring unit 122 obtains the direction-of-departure $u_1$ and the direction-of-arrival $u_2$ corresponding to the directional spectrum $|P_C(u_1, u_2)$ in which the obtained difference $|u_1 - u_2|$ between the direction-of-

departure $u_1$ and the direction-of-arrival $u_2$ is minimum as the direction-of-departure $u_{AMAX}$ and the direction-of-arrival $u_{BMAX}$ constituting the bidirectional measured angle value in the reception signal vector of interest x(i).

In step ST2, the propagation mode distinguishing unit 123 compares the difference $|u_{AMAX}-u_{BMAX}|$ between the direction-of-departure $u_{AMAX}$ and the direction-of-arrival $u_{BMAX}$ constituting the bidirectional measured angle value in the reception signal vector of interest x(i) obtained by the bidirectional angle measuring unit 122 with the threshold th for each matched filter output.

As described above, the MIMO radar signal processing device according to the first embodiment includes the bidirectional angle measuring unit 122 that obtains the bidirectional measured angle value constituted by the direction-of-departure $u_{AMAX}$ and the direction-of-arrival $u_{BMAX}$ in the reception signal vector of interest x(i) corresponding to the range Doppler cell given in the target detection processing among the reception signal vectors for the matched filter outputs from the plurality of matched filter banks 121. Therefore, for example, it is possible to obtain the bidirectional measured angle value that can be used to distinguish whether the propagation mode is the direct propagation mode or the multipath propagation mode.

That is, when the bidirectional measured angle value constituted by the direction-of-departure $u_{AMAX}$ and the direction-of-arrival $u_{BMAX}$ in the reception signal vector of interest x(i) obtained by the bidirectional angle measuring unit 122 is used for distinguishing the propagation mode, it is possible to accurately distinguish whether the propagation mode of the reception signal vector of interest x(i) is the direct propagation mode or the multipath propagation mode, and to grasp the propagation environment sensed by the MIMO radar device in more detail.

Furthermore, since the MIMO radar signal processing device according to the first embodiment further includes the propagation mode distinguishing unit that distinguishes whether the propagation mode of the reception signal vector of interest x(i) for the bidirectional measured angle values ($u_{AMAX}$, $u_{BMAX}$) obtained by the bidirectional angle measuring unit 122 is the direct propagation mode or the multipath propagation mode, it is possible to accurately distinguish whether the propagation mode of the reception signal vector of interest x(i) is the direct propagation mode or the multipath propagation mode, and to grasp the propagation environment sensed by the MIMO radar device in more detail.

Second Embodiment.

A MIMO radar device according to a second embodiment will be described.

A MIMO radar device according to a second embodiment differs from the MIMO radar device according to the first embodiment in the bidirectional angle measuring unit 122, and the other configurations are the same as or similar to those of the MIMO radar device according to the first embodiment.

Therefore, the bidirectional angle measuring unit 122 will be mainly described below.

When the direction-of-departure (propagation angle $u_1$) and the direction-of-arrival (propagation angle $u_2$) as variables constituting the bidirectional measured angle value in the reception signal vector of interest x(i) are the same, similarly to the bidirectional angle measuring unit 122 in the MIMO radar device according to the first embodiment, the bidirectional angle measuring unit 122 obtains the propagation angle $u_1$ and the propagation angle $u_2$ at which the directional spectrum $P(u_1, u_2)$ (corresponding to directional spectrum $|P_C(u_1, u_2)$ of the above Equation (12)) has the maximum value used assuming $u_1 = u_2$ in the following Equation (13) by the beamformer method, as the direction-of-departure $u_{AMAX}$ and the direction-of-arrival $u_{BMAX}$ (hereinafter, referred to as the first direction-of-departure $u_{AMAX}$ and the first direction-of-arrival $u_{BMAX}$) constituting the bidirectional measured angle value in the reception signal vector of interest x(i).

$$(u_A, u_B) = argmax\, P\,(u_1, u_2)$$

$$P(u_1, u_2) = \begin{cases} \left| \dfrac{b^H(u_1,u_2)R_{xx}b(u_1,u_2)}{b^H(u_1,u_2)b(u_1,u_2)} \right| \text{ for } u_1 \neq u_2 \\[2ex] \left| \dfrac{a_{MIMO}{}^H(u_1,u_2)R_{xx}a_{MIMO}(u_1,u_2)}{a_{MIMO}{}^H(u_1,u_2)a_{MIMO}(u_1,u_2)} \right| \text{ for } u_1 = u_2 \end{cases} \qquad \cdots (13)$$

Equation (13) represents a directional spectrum $P(u_1, u_2)$ used assuming $u_1 = u_2$ and a directional spectrum $P(u_1, u_2)$ used assuming $u_1 \neq u_2$.

When the direction-of-departure and the direction-of-arrival as variables constituting the bidirectional measured angle value in the reception signal vector of interest x(i) are different from each other, the bidirectional angle measuring unit 122 obtains a directional spectrum $P(u_1, u_2)$ to be used assuming $u_1 \neq u_2$ in the above Equation (13) by the beamformer method, and obtains a propagation angle $u_1$ and a propagation angle $u_2$ at which the directional spectrum $P(u_1, u_2)$ has the maximum value as a direction-of-departure $u_{AMAX}$ and a direction-of-arrival $u_{BMAX}$ (hereinafter, referred to as a second direction-of-departure $u_{AMAX}$ and a second direction-of-arrival $u_{BMAX}$) constituting the bidirectional measured angle value in the reception signal vector of interest x(i).

In Expression (13), the directional spectrum $P(u_1, u_2)$ used assuming $u_1 \neq u_2$ depends on the multipath steering vector $b(u_1, u_2)$ and depends on the propagation angle $(u_1, u_2)$.

As shown in the above Equation (13), the multipath steering vector $b(u_1, u_2)$ is a sum of a virtual array steering vector $a_{MIMO}(u_1, u_2)$ and a virtual array steering vector $a_{MIMO}(u_1, u_2)$ in which the direction-of-departure $u_1$ and the direction-of-arrival $u_2$ are interchanged with respect to the virtual array steering vector $a_{MIMO}(u_2, u_1)$.

In the above Equation (13), $u_1$ and $u_2$ in the directional spectrum $P(u_1, u_2)$ used assuming $u_1 \neq u_2$ are scan angles, and there is no distinction between the direction-of-departure and the direction-of-arrival.

In short, in the directional spectrum $P(u_1, u_2)$ used assuming $u_1 \neq u_2$ in the above equation (13), the propagation angle $u_1$ and the propagation angle $u_2$ at which the directional spectrum $P(u_1, u_2)$ has the maximum value are obtained as the second direction-of-departure $u_{AMAX}$ and the second direction-of-arrival $u_{BMAX}$ constituting the bidirectional measured angle value in the reception signal vector of interest $x(i)$ with the multipath steering vector $b(u_1, u_2)$ as a variable.

The bidirectional angle measuring unit 122 compares the magnitude relationship between the directional spectrum $P(u_1, u_2)$ according to the first direction-of-departure $u_{AMAX}$ and the first direction-of-arrival $u_{BMAX}$ and the directional spectrum $P(u_1, u_2)$ according to the second direction-of-departure $u_{AMAX}$ and the second direction-of-arrival $u_{BMAX}$, and obtains the propagation angle $u_1$ and the propagation angle $u_2$ of the directional spectrum $P(u_1, u_2)$ having a large value as the direction-of-departure $u_{AMAX}$ and the direction-of-arrival $u_{BMAX}$ constituting the bidirectional measured angle value in the reception signal vector of interest $x(i)$.

The directional spectrum $P(u_1, u_2)$ has a maximum value for the reception signal vector of interest $x(i)$ when the propagation angle $(u_1, u_2)$ indicates the propagation angle of the direct propagation mode in the direct propagation path or the propagation angle of the multipath propagation mode in the multipath propagation path.

That is, the bidirectional measured angle value $(u_{AMAX}, u_{BMAX})$ in which the direction-of-departure is $u_{AMAX}$ and the direction-of-arrival is $u_{BMAX}$ indicates whether the propagation mode of the reception signal vector of interest $x(i)$ is the direct propagation mode or the multipath propagation mode.

Note that the bidirectional angle measuring unit 122 obtains the bidirectional measured angle value $(u_{AMAX}, u_{BMAX})$ by the beamformer method in the above example, but may obtain the bidirectional measured angle value $(u_{AMAX}, u_{BMAX})$ by the MUSIC method or the ESPRIT method.

The propagation mode distinguishing unit 123 obtains a difference $|u_{AMAX}-u_{BMAX}|$ between the direction-of-departure $u_{AMAX}$ and the direction-of-arrival $u_{BMAX}$ constituting the bidirectional measured angle value in the reception signal vector of interest $x(i)$ obtained by the bidirectional angle measuring unit 122, and compares the obtained difference $|u_{AMAX}-u_{BMAX}|$ with the threshold th.

When the difference $|u_{AMAX}-u_{BMAX}|$ is equal to or less than the threshold th, the propagation mode distinguishing unit 123 distinguishes that the propagation mode in the reception signal vector of interest $x(i)$ is the direct propagation mode, and outputs a distinguished result indicating that the propagation mode is the direct propagation mode.

On the other hand, when the difference $|u_{AMAX}-u_{BMAX}|$ exceeds the threshold th, the propagation mode distinguishing unit 123 distinguishes that the propagation mode of the reception signal vector of interest $x(i)$ is the multipath propagation mode, and outputs a distinguished result indicating that the propagation mode is the multipath propagation mode.

Note that the bidirectional angle measuring unit 122 may not compare the magnitude relationship between the directional spectrum $P(u_1, u_2)$ according to the first direction-of-departure $u_{AMAX}$ and the first direction-of-arrival $u_{BMAX}$ and the directional spectrum $P(u_1, u_2)$ according to the second direction-of-departure $u_{AMAX}$ and the second direction-of-arrival $u_{BMAX}$, and the propagation mode distinguishing unit 123 may obtain the difference $|u_{AMAX}-u_{BMAX}|$ between the direction-of-departure $u_{AMAX}$ and the direction-of-arrival $u_{BMAX}$ constituting the bidirectional measured angle value obtained by the bidirectional angle measuring unit 122 for each of the first direction-of-departure $u_{AMAX}$ and the first direction-of-arrival $u_{BMAX}$ and the second direction-of-departure $u_{AMAX}$ and the second direction-of-arrival $u_{BMAX}$ and compare the obtained difference $|u_{AMAX}-u_{BMAX}|$ with the threshold th.

Even in this case, when the difference $|u_{AMAX}-u_{BMAX}|$ is equal to or less than the threshold th, the propagation mode distinguishing unit 123 distinguishes that the propagation mode of the reception signal vector of interest $x(i)$ is the direct propagation mode, and outputs a distinguished result indicating that the propagation mode is the direct propagation mode.

On the other hand, when the difference $|u_{AMAX}-u_{BMAX}|$ exceeds the threshold th, the propagation mode distinguishing unit 123 distinguishes that the propagation mode of the reception signal vector of interest $x(i)$ is the multipath propagation mode, and outputs a distinguished result indicating that the propagation mode is the multipath propagation mode.

Further, when there is a directional spectrum $P(u_1, u_2)$ indicating a plurality of local maximum points in the directional spectrum $P(u_1, u_2)$ used assuming $u_1 = u_2$ in the above Equation (13) obtained by using the direction-of-departure $u_1$ and the direction-of-arrival $u_2$ constituting the bidirectional measured angle value in each reception signal vector of interest $x(i)$ as variables and in the directional spectrum $P(u_1, u_2)$ used assuming $u_1 \neq u_2$, the bidirectional angle measuring unit 122 obtains a difference $|u_1 - u_2|$ between the direction-of-departure $u_1$ and the direction-of-arrival $u_2$

corresponding to each of the directional spectra $P(u_1, u_2)$ indicating a plurality of local maximum points, and obtains the direction-of-departure $u_1$ and the direction-of-arrival $u_2$ corresponding to the directional spectrum $P(u_1, u_2)$ in which the difference $|u_1 - u_2|$ between the direction-of-departure $u_1$ and the direction-of-arrival $u_2$ indicates a minimum as the direction-of-departure $u_{AMAX}$ and the direction-of-arrival $u_{BMAX}$ constituting the bidirectional measured angle value in the reception signal vector of interest $x(i)$.

At this time, the propagation mode distinguishing unit 123 compares the difference $|u_{AMAX}-u_{BMAX}|$ between the direction-of-departure $u_{AMAX}$ and the direction-of-arrival $u_{BMAX}$ obtained by selecting from the directional spectra $P(u_1, u_2)$ indicating a plurality of local maximum points by the bidirectional angle measuring unit 122 with the threshold th.

The MIMO radar signal processing device according to the second embodiment also has effects similar to those of the MIMO radar signal processing device according to the first embodiment.

Further, the MIMO radar signal processing device according to the second embodiment, when the direction-of-departure $u_1$ and the direction-of-arrival $u_2$ are equal, obtains the propagation angle $u_1$ and the propagation angle $u_2$ at which the directional spectrum $P(u_1, u_2)$ has the maximum value as the first direction-of-departure $u_{AMAX}$ and the first direction-of-arrival $u_{BMAX}$ constituting the bidirectional measured angle value in the reception signal vector of interest $x(i)$ using the virtual array steering vector $a_{MIMO}(u_A, u_B)$ as a variable, and when the direction-of-departure $u_1$ and the direction-of-arrival $u_2$ are different from each other, obtains the propagation angle $u_1$ and the propagation angle $u_2$ at which the directional spectrum $P(u_1, u_2)$ has the maximum value as the second direction-of-departure $u_{AMAX}$ and the second direction-of-arrival $u_{BMAX}$ constituting the bidirectional measured angle value in the reception signal vector of interest $x(i)$ using the multipath steering vector $b(u_1, u_2)$ as a variable, and, since the propagation angle $u_1$ and the propagation angle $u_2$ of the directional spectrum $P(u_1, u_2)$ having a large value of the directional spectrum $P(u_1, u_2)$ according to the first direction-of-departure $u_{AMAX}$ and the first direction-of-arrival $u_{BMAX}$ and the directional spectrum $P(u_1, u_2)$ according to the second direction-of-departure $u_{AMAX}$ and the second direction-of-arrival $u_{BMAX}$ are obtained as the direction-of-departure $u_{AMAX}$ and the direction-of-arrival $u_{BMAX}$ constituting the bidirectional measured angle value in the reception signal vector of interest $x(i)$, it is possible to obtain the bidirectional measured angle value in the reception signal vector of interest $x(i)$ without ambiguity even when the grating lobe is included in the beam pattern of the arrival wave RW captured by the reception antenna 2.

As a result, it is possible to more accurately distinguish whether the propagation mode of the reception signal vector of interest $x(i)$ is the direct propagation mode or the multipath propagation mode.

INDUSTRIAL APPLICABILITY

The MIMO radar signal processing device according to the present disclosure can be used in a flying object monitoring radar device, an aircraft monitoring radar device, a marine radar device, a ship monitoring radar device, an in-vehicle radar device, an infrastructure radar device, and the like.

REFERENCE SIGNS LIST

$1_1$ to $1_N$: first transmission antenna to Nth transmission antenna, $2_1$ to $2_M$: first reception antenna to Mth reception antenna, 100: MIMO radar signal processing device, 110: transmission signal processing device, $111_1$ to $111_N$: first transmission signal generating unit to Nth transmission signal generating unit, 120: reception signal processing device, $121_1$ to $121_M$: first matched filter bank to Mth matched filter bank, 122: bidirectional angle measuring unit, 123: propagation mode distinguishing unit

**Claims**

1. A MIMO radar signal processing device comprising:

   a plurality of transmission signal generating units ($111_1$-$111_N$) configured to generate transmission signals different from each other and configured to output the generated transmission signals to corresponding transmission antennas ($1_1$-$1_N$);
   a plurality of matched filter banks ($121_1$-$121_M$), each configured to receive a reception signal from a reception antenna ($2_1$-$2_M$) corresponding to each of a plurality of reception antennas ($2_1$-$2_M$) that capture reflected waves obtained by transmission waves transmitted from the transmission antennas ($1_1$-$1_N$), reaching an object and being reflected as arrival waves, and configured to receive transmission signals from the plurality of transmission signal generating units ($111_1$-$111_N$), and configured to output matched filter outputs serving as vector elements of reception signal vectors, using the transmission signals from the plurality of transmission signal generating units ($111_1$-$111_N$) as a replica of a matched filter; **characterized by**

a bidirectional angle measuring unit (122) configured to obtain a bidirectional measured angle value constituted by a direction-of-departure and a direction-of-arrival in a reception signal vector of interest corresponding to a range Doppler cell given in target detection processing among reception signal vectors for matched filter outputs from the plurality of matched filter banks ($121_1$-$121_M$); and

a propagation mode distinguishing unit (123) configured to distinguish, by the bidirectional measured angle value, whether a propagation mode of the reception signal vector of interest for the bidirectional measured angle value calculated by the bidirectional angle measuring unit (122) is a direct propagation mode or a multipath propagation mode.

2. The MIMO radar signal processing device according to claim 1, wherein the bidirectional angle measuring unit (122) is configured to obtain the bidirectional measured angle value by obtaining a direction-of-departure and a direction-of-arrival at which a directional spectrum obtained using a transmission array steering vector related to the transmission signal and a reception array steering vector related to the reception signal as variables indicates a maximum value as a direction-of-departure and a direction-of-arrival constituting the bidirectional measured angle value in the reception signal vector of interest.

3. The MIMO radar signal processing device according to claim 1, wherein the bidirectional angle measuring unit (122) is configured to obtain the bidirectional measured angle value by obtaining a direction-of-departure and a direction-of-arrival at which a directional spectrum obtained using a direction-of-departure and a direction-of-arrival constituting the bidirectional measured angle value in the reception signal vector of interest as variables indicates a maximum value, as a direction-of-departure and a direction-of-arrival constituting a bidirectional measured angle value in the reception signal vector of interest.

4. The MIMO radar signal processing device according to claim 1, wherein when there is a directional spectrum indicating a plurality of local maximum points in a directional spectrum obtained by using a direction-of-departure and a direction-of-arrival constituting the bidirectional measured angle value in the reception signal vector of interest as variables, the bidirectional angle measuring unit (122) is configured to obtain the bidirectional measured angle value by calculating a difference between a direction-of-departure and a direction-of-arrival corresponding to each of directional spectra indicating a plurality of local maximum points, and configured to obtain a direction-of-departure and a direction-of-arrival corresponding to a directional spectrum in which the difference between the direction-of-departure and the direction-of-arrival is minimum, as a direction-of-departure and a direction-of-arrival constituting the bidirectional measured angle value in the reception signal vector of interest.

5. The MIMO radar signal processing device according to claim 1, wherein the bidirectional angle measuring unit (122) is configured to obtain the bidirectional measured angle value by obtaining a directional spectrum with a multipath steering vector as a variable, the multipath steering vector being a sum of a virtual array steering vector corresponding to a direction-of-departure and a direction-of-arrival different from each other and a virtual array steering vector obtained by switching a direction-of-departure and a direction-of-arrival with respect to the virtual array steering vector when the direction-of-departure and the direction-of-arrival constituting the bidirectional measured angle value in the reception signal vector of interest as variables are different from each other, configured to obtain a directional spectrum with a virtual array steering vector corresponding to the same direction-of-departure and the direction-of-arrival when the direction-of-departure and the direction-of-arrival constituting the bidirectional measured angle value in the reception signal vector of interest as variables are the same, and configured to obtain the direction-of-departure and the direction-of-arrival at which the obtained directional spectrum has a maximum value as the direction-of-departure and the direction-of-arrival constituting the bidirectional measured angle value in the reception signal vector of interest.

6. The MIMO radar signal processing device according to any one of claims 1 to 5, wherein the propagation mode distinguishing unit (123) is configured to compare a value of a difference between a direction-of-departure and a direction-of-arrival constituting the bidirectional measured angle value obtained by the bidirectional angle measuring unit (122) with a threshold, configured to distinguish the propagation mode as a direct propagation mode when the value of the difference is equal to or less than the threshold, and configured to distinguish the propagation mode as a multipath propagation mode when the value of the difference exceeds the threshold.

7. A method for distinguishing a propagation mode of a reception signal vector of interest for a reception signal, the method comprising the steps step of

generating transmission signals different from each other by a plurality of transmission signal generating units (1111-111N), and outputting the generated transmission signals to corresponding transmission antennas $(1_1\text{-}1_N)$; receiving by a plurality of matched filter banks $(121_1\text{-}121_M)$, a reception signal from a reception antenna $(2_1\text{-}2_M)$ corresponding to each of a plurality of reception antennas $(2_1\text{-}2_M)$ that capture reflected waves obtained by transmission waves transmitted from the transmission antennas $(1_1\text{-}1_N)$ reaching an object and being reflected as arrival waves, and receiving, by the plurality of matched filter banks (1211-121M), transmission signals from the plurality of transmission signal generating units (1111-111N), and outputting matched filter outputs serving as vector elements of reception signal vectors, using the transmission signals from the plurality of transmission signal generating units (1111-111N) as a replica of a matched filter; **characterized by**
obtaining, by a bidirectional angle measuring unit (122), a bidirectional measured angle value constituted by a direction-of-departure and a direction-of-arrival in the reception signal vector of interest corresponding to a range Doppler cell given in target detection processing among reception signal vectors for matched filter outputs output from the plurality of matched filter banks $(121_1\text{-}121_M)$; and by a propagation mode distinguishing unit (123), distinguishing, by the bidirectional measured angle value, whether a propagation mode of the reception signal vector of interest for the bidirectional measured angle value calculated by the bidirectional angle measuring unit (122) is a direct propagation mode or a multipath propagation mode.

8. The method for distinguishing a propagation mode of a reception signal vector of interest according to claim 7, the method further comprising a step of comparing, by the propagation mode distinguishing unit (123), a value of a difference between a direction-of-departure and a direction-of-arrival constituting the bidirectional measured angle value obtained by the bidirectional angle measuring unit (122) with a threshold, and distinguishing the propagation mode as a direct propagation mode when the value of the difference is equal to or less than the threshold, and distinguishing the propagation mode as a multipath propagation mode when the value of the difference exceeds the threshold.

**Patentansprüche**

1. MIMO-Radarsignal-Verarbeitungseinrichtung, umfassend:

eine Vielzahl von Übertragungssignal-Erzeugungseinheiten $(111_1\text{-}111_N)$, die eingerichtet sind, voneinander verschiedene Übertragungssignale zu erzeugen, und eingerichtet sind, die erzeugten Übertragungssignale an korrespondierende Übertragungsantennen (11-1N) auszugeben;
eine Vielzahl von angepassten Filterbänken $(121_1\text{-}121_M)$, die jeweils eingerichtet sind, ein Empfangssignal von einer Empfangsantenne $(2_1\text{-}2_N)$ zu empfangen, korrespondierend mit jeder von einer Vielzahl von Empfangsantennen $(2_1\text{-}2_M)$, die reflektierte Wellen einfangen, die durch Übertragungswellen eingeholt werden, die von den Übertragungsantennen $(1_1\text{-}1_N)$ übertragen werden, ein Objekt erreichen und als Eintreffwellen reflektiert werden, und eingerichtet ist, Übertragungssignale von der Vielzahl von Übertragungssignal-Erzeugungseinheiten $(111_1\text{-}111_N)$ zu empfangen, und eingerichtet ist, angepasste Filterausgaben auszugeben, die als Vektorelemente von Empfangssignalvektoren dienen, unter Verwendung der Übertragungssignale von der Vielzahl von Übertragungssignal-Erzeugungseinheiten $(111_1\text{-}111_N)$ als ein Replikat eines angepassten Filters; **gekennzeichnet durch**
eine bidirektionale Winkelmesseinheit (122), die eingerichtet ist, einen bidirektionalen Messwinkelwert zu beziehen, der durch eine Abgangsrichtung und eine Eintreffrichtung in einem Empfangssignalvektor gebildet wird, der, korrespondierend mit einer Entfernungs-Doppler-Zelle, die bei Zielerfassungsverarbeitung gegeben ist, unter Empfangssignalvektoren für angepasste Filterausgaben aus der Vielzahl von angepassten Filterbänken (1211-121M) von Interesse ist; und
eine Laufzeitmodus-Differenzierungseinheit (123), die eingerichtet ist, durch den bidirektionalen Messwinkelwert zu differenzieren, ob ein Laufzeitmodus des Empfangssignalvektors von Interesse für den bidirektionalen Messwinkelwert, der durch die bidirektionale Winkelmesseinheit (122) berechnet wurde, ein direkter Laufzeitmodus oder ein Mehrweg-Laufzeitmodus ist.

2. MIMO-Radarsignal-Verarbeitungseinrichtung nach Anspruch 1, wobei die bidirektionale Winkelmesseinheit (122) eingerichtet ist, den bidirektionalen Messwinkelwert zu beziehen, indem eine Abgangsrichtung und eine Eintreffrichtung bezogen werden, bei denen ein Richtungsspektrum, das unter Verwendung eines auf das Übertragungssignal bezogenen Übertragungs-Array-Lenkungsvektors und eines auf das Empfangssignal bezogenen Empfangs-Array-Lenkungsvektors als Variablen bezogen wird, einen Maximalwert als eine Abgangsrichtung und eine Eintreffrichtung angibt, die den bidirektionalen Messwinkelwert in dem Empfangssignalvektor von Interesse bilden.

3. MIMO-Radarsignal-Verarbeitungseinrichtung nach Anspruch 1, wobei die bidirektionale Winkelmesseinheit (122) eingerichtet ist, den bidirektionalen Messwinkelwert zu beziehen, indem eine Abgangsrichtung und eine Eintreffrichtung bezogen werden, bei denen ein Richtungsspektrum, das unter Verwendung einer Abgangsrichtung und einer Eintreffrichtung, die den bidirektionalen Messwinkelwert in dem Empfangssignalvektor von Interesse als Variablen bilden, bezogen wird, einen Maximalwert anzeigt, als eine Abgangsrichtung und eine Eintreffrichtung, die einen bidirektionalen Messwinkelwert in dem Empfangssignalvektor von Interesse bilden.

4. MIMO-Radarsignal-Verarbeitungseinrichtung nach Anspruch 1, wobei, wenn es ein Richtungsspektrum gibt, das eine Vielzahl von lokalen Maximalpunkten in einem Richtungsspektrum anzeigt, das unter Verwendung einer Abgangsrichtung und einer Eintreffrichtung, die den bidirektionalen Messwinkelwert in dem Empfangssignalvektor von Interesse als Variablen bilden, bezogen wird, die bidirektionale Winkelmesseinheit (122) eingerichtet ist, den bidirektionalen Messwinkelwert durch Berechnen einer Differenz zwischen einer Abgangsrichtung und einer Eintreffrichtung zu beziehen, korrespondierend mit jedem von Richtungsspektren, die eine Vielzahl von lokalen Maximalpunkten anzeigen, und eingerichtet ist, eine Abgangsrichtung und eine Eintreffrichtung zu beziehen, korrespondierend mit einem Richtungsspektrum, in dem die Differenz zwischen der Abgangsrichtung und der Eintreffrichtung minimal ist, als eine Abgangsrichtung und eine Eintreffrichtung, die den bidirektionalen Messwinkelwert in dem Empfangssignalvektor von Interesse bilden.

5. MIMO-Radarsignal-Verarbeitungseinrichtung nach Anspruch 1, wobei die bidirektionale Winkelmesseinheit (122) eingerichtet ist, den bidirektionalen Messwinkelwert zu beziehen, indem ein Richtungsspektrum mit einem Mehrweg-Lenkungsvektor als eine Variable bezogen wird, der Mehrweg-Lenkungsvektor eine Summe eines virtuellen Array-Lenkungsvektors ist, korrespondierend mit einer Abgangsrichtung und einer Eintreffrichtung, die voneinander verschieden sind, und eines virtuellen Array-Lenkungsvektors, der durch Wechseln einer Abgangsrichtung und einer Eintreffrichtung in Bezug auf den virtuellen Array-Lenkungsvektor bezogen wird, wenn die Abgangsrichtung und die Eintreffrichtung, die den bidirektionalen Messwinkelwert in dem Empfangssignalvektor von Interesse als Variablen bilden, voneinander verschieden sind, eingerichtet ist, ein Richtungsspektrum mit einem virtuellen Array-Lenkungsvektor zu beziehen, korrespondierend mit der gleichen Abgangsrichtung und der gleichen Eintreffrichtung, wenn die Abgangsrichtung und die Eintreffrichtung, die den bidirektionalen Messwinkelwert in dem Empfangssignalvektor von Interesse als Variablen bilden, gleich sind, und eingerichtet ist, die Abgangsrichtung und die Eintreffrichtung zu beziehen, bei denen das bezogene Richtungsspektrum einen Maximalwert als die Abgangsrichtung und die Eintreffrichtung hat, die den bidirektionalen Messwinkelwert in dem Empfangssignalvektor von Interesse bilden.

6. MIMI-Radarsignal-Verarbeitungseinrichtung nach einem der Ansprüche 1 bis 5, wobei die Laufzeitmodus-Differenzierungseinheit (123) eingerichtet ist, einen Wert einer Differenz zwischen einer Abgangsrichtung und einer Eintreffrichtung, die den durch die bidirektionale Winkelmesseinheit (122) bezogenen bidirektionalen Messwinkelwert bilden, mit einem Schwellenwert zu vergleichen, eingerichtet ist, den Laufzeitmodus als einen direkten Laufzeitmodus zu differenzieren, wenn der Wert der Differenz gleich oder kleiner als der Schwellenwert ist, und eingerichtet ist, den Laufzeitmodus als einen Mehrweg-Laufzeitmodus zu differenzieren, wenn der Wert der Differenz den Schwellenwert überschreitet.

7. Verfahren zur Differenzierung eines Laufzeitmodus eines Empfangssignalvektors von Interesse für ein Empfangssignal, wobei das Verfahren die folgenden Schritte umfasst:

Erzeugen von Übertragungssignalen, die voneinander verschieden sind, durch eine Vielzahl von Übertragungssignal-Erzeugungseinheiten ($111_1$-$111_N$), und Ausgeben der erzeugten Übertragungssignale an korrespondierende Übertragungsantennen ($1_1$-$1_N$);
Empfangen, durch eine Vielzahl von angepassten Filterbänken ($121_1$-$121_M$), eines Empfangssignals von einer Empfangsantenne ($2_1$-$2_M$), korrespondierend mit jeder einer Vielzahl von Empfangsantennen ($21$-$2M$), die reflektierte Wellen einfangen, die von Übertragungswellen bezogen werden, die von den Übertragungsantennen ($1_1$-$1_N$) übertragen werden, ein Objekt erreichen und als Eintreffwellen reflektiert werden, und Empfangen, durch die Vielzahl von angepassten Filterbänken ($121_1$-$121_M$), von Übertragungssignalen von der Vielzahl von Übertragungssignal-Erzeugungseinheiten ($111_1$-$111_N$), und Ausgeben von angepassten Filterausgaben, die als Vektorelemente von Empfangssignalvektoren dienen, unter Verwendung der Übertragungssignale von der Vielzahl von Übertragungssignal-Erzeugungseinheiten ($111_1$-$111_N$) als ein Replikat eines angepassten Filters;
**gekennzeichnet durch**
Beziehen, durch eine bidirektionale Winkelmesseinheit (122), eines bidirektionalen Messwinkelwertes, der durch eine Abgangsrichtung und eine Eintreffrichtung in dem Empfangssignalvektor gebildet wird, der, korrespondierend mit einer Entfernungs-Doppler-Zelle, die bei Zielerfassungsverarbeitung gegeben ist, unter Empfangssignalvektoren für angepasste Filterausgaben, die von der Vielzahl von angepassten Filterbänken (1211-121M) ausgegeben werden, von Interesse ist; und

durch eine Laufzeitmodus-Differenzierungseinheit (123), Differenzieren, anhand des bidirektionalen Messwinkelwertes, ob ein Laufzeitmodus des Empfangssignalvektors, der für den von der bidirektionalen Winkelmesseinheit (122) berechneten bidirektionalen Messwinkelwert von Interesse ist, ein direkter Laufzeitmodus oder ein Mehrweg-Laufzeitmodus ist.

**8.** Verfahren zur Differenzierung eines Laufzeitmodus eines Empfangssignalvektors von Interesse nach Anspruch 7,

wobei das Verfahren ferner einen Schritt des Vergleichens umfasst durch

die Laufzeitmodus-Differenzierungseinheit (123), eines Wertes einer Differenz zwischen einer Abgangsrichtung und einer Eintreffrichtung, die den durch die bidirektionale Winkelmesseinheit (122) bezogenen bidirektionalen Winkelmesswert bilden, mit einem Schwellenwert, und

Differenzierens des Laufzeitmodus als einen direkten Laufzeitmodus, wenn der Wert der Differenz gleich oder kleiner als der Schwellenwert ist,

und Differenzierens des Laufzeitmodus als einen Mehrweg-Laufzeitmodus, wenn der Wert der Differenz den Schwellenwert überschreitet.

## Revendications

**1.** Dispositif de traitement de signal radar MIMO, comprenant :

une pluralité d'unités de génération de signal de transmission (1111-111N) configurées pour générer des signaux de transmission différents les uns des autres et configurées pour délivrer en sortie les signaux de transmission générés à des antennes de transmission correspondantes ($1_1$-$1_N$) ;

une pluralité de bancs de filtres appariés ($121_1$-$121_M$), configurés pour recevoir un signal de réception à partir d'une antenne de réception ($2_1$-$2_M$) correspondant à chacune d'une pluralité d'antennes de réception ($2_1$-$2_M$) qui capturent des ondes réfléchies obtenues par des ondes de transmission transmises à partir des antennes de transmission ($1_1$-$1_N$), atteignant un objet et étant réfléchies en tant qu'ondes d'arrivée, et configurés pour recevoir des signaux de transmission à partir de la pluralité d'unités de génération de signal de transmission ($111_1$-$111_N$), et configuré pour délivrer en sortie des sorties de filtres appariés servant d'éléments vectoriels de vecteurs de signal de réception, en utilisant les signaux de transmission à partir de la pluralité d'unités de génération de signaux de transmission ($111_1$-$111_N$) en tant que réplique d'un filtre apparié ; **caractérisé par** :

une unité de mesure d'angle bidirectionnel (122) configurée pour obtenir une valeur d'angle mesuré bidirectionnel constitué d'une direction de départ et d'une direction d'arrivée dans un vecteur de signal de réception d'intérêt correspondant à une cellule Doppler de portée donnée dans un traitement de détection de cible parmi des vecteurs de signal de réception pour des sorties de filtres appariés à partir de la pluralité de bancs de filtres appariés (1211-121M) ; et

une unité de distinction de mode de propagation (123) configurée pour distinguer, par l'intermédiaire de la valeur d'angle mesuré bidirectionnel, si un mode de propagation du vecteur de signal de réception d'intérêt pour la valeur d'angle mesuré bidirectionnel calculée par l'unité de mesure d'angle bidirectionnel (122) est un mode de propagation directe ou un mode de propagation à trajets multiples.

**2.** Dispositif de traitement de signal radar MIMO selon la revendication 1, dans lequel l'unité de mesure d'angle bidirectionnel (122) est configurée pour obtenir la valeur d'angle mesuré bidirectionnel en obtenant une direction de départ et une direction d'arrivée au niveau desquelles un spectre directionnel obtenu en utilisant un vecteur de direction de réseau de transmission lié au signal de transmission et un vecteur de direction de réseau de réception lié au signal de réception en tant que variables indique une valeur maximale en tant que direction de départ, et une direction d'arrivée constituant la valeur d'angle mesuré bidirectionnel dans le vecteur de signal de réception d'intérêt.

**3.** Dispositif de traitement de signal radar MIMO selon la revendication 1, dans lequel l'unité de mesure d'angle bidirectionnel (122) est configurée pour obtenir la valeur d'angle mesuré bidirectionnel en obtenant une direction de départ et une direction d'arrivée au niveau desquelles un spectre directionnel obtenu en utilisant une direction de départ et une direction d'arrivée constituant la valeur d'angle mesuré bidirectionnel dans le vecteur de signal de réception d'intérêt en tant que variables indique une valeur maximale, en tant que direction de départ et direction d'arrivée constituant une valeur d'angle mesuré bidirectionnel dans le vecteur de signal de réception d'intérêt.

**4.** Dispositif de traitement de signal radar MIMO selon la revendication 1, dans lequel lorsqu'il existe un spectre directionnel indiquant une pluralité de points maximums locaux dans un spectre directionnel obtenu en utilisant une direction de départ et une direction d'arrivée constituant la valeur d'angle mesuré bidirectionnel dans le vecteur de signal de réception d'intérêt en tant que variables, l'unité de mesure d'angle bidirectionnel (122) est configurée pour obtenir la valeur d'angle mesuré bidirectionnel en calculant une différence entre une direction de départ et une direction d'arrivée correspondant à chacun de spectres directionnels indiquant une pluralité de points maximums locaux, et configurée pour obtenir une direction de départ et une direction d'arrivée correspondant à un spectre directionnel dans lequel la différence entre la direction de départ et la direction d'arrivée est minimale, en tant que direction de départ et direction d'arrivée constituant la valeur d'angle mesuré bidirectionnel dans le vecteur de signal de réception d'intérêt.

**5.** Dispositif de traitement de signal radar MIMO selon la revendication 1, dans lequel l'unité de mesure d'angle bidirectionnel (122) est configurée pour obtenir la valeur d'angle mesuré bidirectionnel en obtenant un spectre directionnel avec un vecteur de direction à trajets multiples en tant que variable, le vecteur de direction à trajets multiples étant une somme d'un vecteur de direction de réseau virtuel correspondant à une direction de départ et d'un direction d'arrivée différente l'une de l'autre et d'un vecteur de direction de réseau virtuel obtenu en commutant une direction de départ et une direction d'arrivée par rapport au vecteur de direction de réseau virtuel lorsque la direction de départ et la direction d'arrivée constituant la valeur d'angle mesuré bidirectionnel dans le vecteur de signal de réception d'intérêt en tant que variables sont différentes l'une de l'autre, configurée pour obtenir un spectre directionnel avec un vecteur de direction de réseau virtuel correspondant à la même direction de départ et à la direction d'arrivée lorsque la direction de départ et la direction d'arrivée constituant la valeur d'angle mesuré bidirectionnel dans le vecteur de signal de réception d'intérêt en tant que variables sont identiques, et configurée pour obtenir la direction de départ et la direction d'arrivée au niveau desquelles le spectre directionnel obtenu présente une valeur maximale en tant que direction de départ et direction d'arrivée constituant la valeur d'angle mesuré bidirectionnel dans le vecteur de signal de réception d'intérêt.

**6.** Dispositif de traitement de signal radar MIMO selon l'une quelconque des revendications 1 à 5, dans lequel l'unité de distinction de mode de propagation (123) est configurée pour comparer une valeur d'une différence entre une direction de départ et une direction d'arrivée constituant la valeur d'angle mesuré bidirectionnel obtenue par l'unité de mesure d'angle bidirectionnel (122) avec un seuil, configurée pour distinguer le mode de propagation en tant que mode de propagation directe lorsque la valeur de la différence est égale ou inférieure au seuil, et configurée pour distinguer le mode de propagation en tant que mode de propagation à trajets multiples lorsque la valeur de la différence dépasse le seuil.

**7.** Procédé pour distinguer un mode de propagation d'un vecteur de signal de réception d'intérêt pour un signal de réception, le procédé comprenant les étapes consistant

à générer des signaux de transmission différents les uns des autres par l'intermédiaire d'une pluralité d'unités de génération de signal de transmission ($111_1$-$111_N$), et à délivrer en sortie les signaux de transmission générés vers des antennes de transmission correspondantes ($1_1$-$1_N$) ;
recevoir, par l'intermédiaire d'une pluralité de bancs de filtres appariés ($121_1$-$121_M$), un signal de réception provenant d'une antenne de réception ($2_1$-$2_M$) correspondant à chacune d'une pluralité d'antennes de réception ($2_1$-$2_M$) qui capturent des ondes réfléchies obtenues par des ondes de transmission transmises par les antennes de transmission ($1_1$-$1_N$), atteignant un objet et étant réfléchies sous la forme d'ondes d'arrivée, et recevoir, par l'intermédiaire de la pluralité de bancs de filtres appariés ($121_1$-$121_M$), des signaux de transmission provenant de la pluralité d'unités de génération de signal de transmission ($111_1$-$111_N$), et délivrer en sortie des sorties de filtres appariés servant d'éléments vectoriels de vecteurs de signal de réception, en utilisant les signaux de transmission provenant de la pluralité d'unités de génération de signal de transmission ($111_1$-$111_N$) en tant que réplique d'un filtre apparié ; **caractérisé par**
l'obtention, par l'intermédiaire d'une unité de mesure d'angle bidirectionnel (122), d'une valeur d'angle mesuré bidirectionnel constituée d'une direction de départ et d'une direction d'arrivée dans le vecteur de signal de réception d'intérêt correspondant à une cellule Doppler de portée donnée dans un traitement de détection de cible parmi des vecteurs de signal de réception pour des sorties de filtres appariés provenant de la pluralité de bancs de filtres appariés ($121_1$-$121_M$) ; et
par l'intermédiaire d'une unité de distinction de mode de propagation (123), distinguer, par l'intermédiaire de la valeur d'angle mesuré bidirectionnel, si un mode de propagation du vecteur de signal de réception d'intérêt pour la valeur d'angle mesuré bidirectionnel calculée par l'unité de mesure d'angle bidirectionnel (122) est un mode de propagation directe ou un mode de propagation à trajets multiples.

**8.** Procédé pour distinguer un mode de propagation d'un vecteur de signal de réception d'intérêt selon la revendication 7,

le procédé comprenant en outre une étape consistant à comparer, par l'intermédiaire de l'unité de distinction de mode de propagation (123), une valeur d'une différence entre une direction de départ et une direction d'arrivée constituant la valeur d'angle mesurée bidirectionnel obtenue par l'unité de mesure d'angle bidirectionnel (122) avec un seuil, et à distinguer le mode de propagation en tant que mode de propagation directe lorsque la valeur de la différence est égale ou inférieure au seuil, et à distinguer le mode de propagation en tant que mode de propagation à trajets multiples lorsque la valeur de la différence dépasse le seuil.

# FIG. 1

# FIG. 2

# FIG. 3

Calculate Bidirectional Measured Angle Value
of Reception Signal Vector of Interest x (i) — ST1

Compare Difference $| u_{AMAX} - u_{BMAX} |$
with Threshold th — ST2

Distinguish Propagation Mode
on Basis of Comparison Result — ST3

Output Distinguished Result

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020186973 A
- US 2021028826 A1
- US 2020292690 A1
- CN 103760547 B

**Non-patent literature cited in the description**

- **HSU, CHENG-HAN ; LIU, HSIN-CHIN ; HUA, MENG-CHANG**. Joint angles of departure and angles of arrival estimation via a spatial-temporal scheme in overloaded bistatic multiple-input multiple-output radars. *Radar, Sonar & Navigation*, 2014, 837-844
- **STEINBAUER, MARTIN ; MOLISCH, A.F. ; BONEK, ERNST.** The double-directional radio channel. Antennas and Propagation Magazine. IEEE., 2001, vol. 43, 51-63